Europäisches Patentamt

European Patent Office

Office européen des brevets

(19)

(11) Veröffentlichungsnummer: **0 116 126**
**A1**

## (12) EUROPÄISCHE PATENTANMELDUNG

(21) Anmeldenummer: 83111067.1

(22) Anmeldetag: 05.11.83

(51) Int. Cl.³: **B 66 F 9/07**
**B 66 F 9/14, B 65 G 1/04**

(30) Priorität: 21.12.82 DE 3247158

(43) Veröffentlichungstag der Anmeldung:
22.08.84 Patentblatt 84/34

(84) Benannte Vertragsstaaten:
CH FR GB IT LI SE

(71) Anmelder: J. Sandt AG
Lemberger Strasse 82
D-6780 Pirmasens(DE)

(72) Erfinder: Mathies, Manfred
Kirchbachlweg 32
D-8201 Riedering(DE)

(72) Erfinder: Vahldiek, Heinz
Hanauer Strasse 39
D-6780 Pirmasens(DE)

(74) Vertreter: Klein, Friedrich
Königstrasse 154
D-6750 Kaiserslautern(DE)

(54) **Regal mit wenigstens einem Regalbediengerät.**

(57) Das Regalbediengerät enthält einen Hubtisch (17), der zur Ein- und Auslagerung von Behältern (5) eine Querfördereinrichtung und eine unabhängig von dieser bewegbare Greifvorrichtung (21) mit mehreren Greifköpfen (22) aufweist. Jeder Greifkopf enthält einen Elektromagnet und jeder Behälter an den Stirnseiten eine magnetisierbare Platte (6). Die Elektromagnete sind kardanisch aufgehängt und an einer ersten Parallelschwinge mit horizontalen Schwingen sowie gemeinsam mit der ersten an einer zweiten Parallelschwinge mit vertikalen Schwinge angeordnet. Die Elektromagnete können sich daher an Schrägstehende Behälter planparallel anlegen und vertikalen Bewegungskomponenten der Behälter während der Ein- und Auslagerung folgen.

EP 0 116 126 A1

./...

Fig. 1

J. SANDT AG PIRMASENS

Regal mit wenigstens einem Regalbediengerät

Ein dem Oberbegriff des Anspruches 1 entsprechendes Regal ist der DE-OS 23 57 857 entnehmbar. Das in der Regalgasse zwischen zwei Regalzeilen längs verfahrbare Bediengerät weist einen vertikal bewegbaren Hubtisch auf. Der Hubtisch enthält zwei mit gegenseitigem Abstand quer zur Regalgasse angeordnete Förderbänder und eine zwischen ihnen auf einem gleichfalls quer zur Regalgasse bewegbaren Schlitten angeordnete Greifvorrichtung. Die Greifvorrichtung weist zwei Greifköpfe auf, von denen jeder eine um eine horizontale, parallel zur Bewegungsbahn des Schlittens liegende Achse schwenkbare Klinke enthält. In der Arbeitsstellung ist die Klinke nach aufwärts gerichtet und wirkt mit einer als Kupplungselement dienenden Griffleiste zusammen, von denen je eine an den Stirnseiten der im Regal gelagerten Behälter befestigt ist. In der Ruhestellung liegt die Klinke unterhalb der oberen Trume der Förderbänder und damit unterhalb der Bewegungsbahn der Behälter. Daher können die Behälter bei in Ruhestellung befindlicher Klinke von den Förderbändern über die Greifvorrichtung und den Schlitten hinwegbewegt werden.

Jede Klinke ist ferner um eine quer zur Bewegungsbahn des Schlittens liegende Achse schwenkbar und liegt durch die Wirkung einer Feder an einer vertikalen Anschlagfläche an. Bei Zugbetrieb hintergreift die Klinke die vorspringende Griffleiste des aus dem Regal auszulagernden Behälters. Bei Schubbetrieb legt sich die Klinke an die Vorderseite der Griffleiste des in das Regal einzulagernden Behälters an und verschwenkt so weit, bis sie sich an einer schrägen Anschlagfläche abstützt. Erst danach wird der Behälter in das Regal eingeschoben. Durch diese als Totgang bezeichnete schwenkbewegliche Anordnung der Klinke braucht sie vor Beginn des Schubbetriebes nicht erst in den Raum zwischen der Griffleiste und der Stirnseite des Behälters eingeschwenkt zu werden.

Die an beiden Stirnseiten der Behälter angebrachten vorspringenden Griffleisten erfordern eine über die eigentliche Behälterlänge hinausgehende Tiefe der Regalfächer und eine entsprechend größere Breite der Regalgassen. Bei größeren, aus einer Vielzahl von Regalzeilen und Regalgassen bestehenden Regalen summieren sich diese an sich kleinen Einzelbeträge zu einem Gesamtbetrag, der der Breite einer oder gar mehrerer Regalzeilen entspricht, so daß ein gegebener Raum nicht optimal ausgenutzt werden kann.

Der im Kennzeichen des Anspruches 1 angegebenen Erfindung liegt daher die Aufgabe zugrunde, ein Regal zu schaffen, bei dem die Breite der Regalfächer und Regalgassen in Abhängigkeit vom gegenseitigen Abstand der beiden Stirnseiten der Behälter auf ein Minimum reduziert ist.

Aufgrund des magnetischen Halteprinzips können die Stirnseiten der Behälter glatt und ebenflächig ausgebildet sein. Sofern die Behälter insgesamt aus Stahlblech bestehen, können sie von dem Elektromagnet des Greifkopfes unmittelbar erfaßt werden. Bestehen die Behälter dagegen aus einem nicht magnetisierbaren Material, so braucht lediglich an den Stirnseiten der Behälter eine magnetisierbare Platte eingelassen oder befestigt zu werden. Da also die Behälter keine mit der Greifvorrichtung formschlüssig zusammenwirkenden vorspringenden Kupplungsteile benötigen, ist deren Gesamtlänge nur noch vom Speichervolumen und der Behälterwandstärke bestimmt. Daher reduziert sich die Tiefe der Regalfächer und die Breite der Regalgassen um das Maß der eingesparten Kupplungsteile.

Da bei Behältern mit ebenen Stirnseiten die Gefahr einer Beschädigung oder Deformierung erheblich geringer ist als bei Behältern mit vorspringenden Kupplungsteilen wird durch das magnetische Halteprinzip die Betriebssicherheit des Regalsystems erhöht.

Der durch das magnetische Halteprinzip bedingte Vorteil der Reduzierung des Platzbedarfs wird nicht nur bei Regalbediengeräten mit einer aus der Bewegungsbahn eines aus einem Regalfach auszulagernden Behälters entfernbaren Greifvorrichtung erreicht, sondern ebenso auch bei solchen Regalbediengeräten, bei denen die Greifvorrichtung stets innerhalb der Bewegungsbahn des Behälters bleibt.

Durch die im Anspruch 2 angegebene kardanische Lagerung des Elektromagneten wird eine winkelmäßige Anpassung des Elektromagneten an die magnetisierbare Platte bei nicht parallel ausgerichteten und/oder schräg zum horizontal verlaufenden Regalfach stehenden Behältern ermöglicht.

Beim höhenmäßigen Anfahren des Hubtisches an ein Regalfach erfolgt der Positioniervorgang je nachdem, ob der Hubtisch leer oder mit einem gefüllten Behälter beladen ist, unter unterschiedlichen Bedingungen, wobei sich in Abhängigkeit von der jeweils bewegten Masse unterschiedlich lange Bremswege ergeben. Da eine hohe Positioniergenauigkeit nur durch aufwendige Steuerungs- bzw. Regelungsmaßnahmen erzielt werden kann, wird eine geringere Genauigkeit mit einem Toleranzbereich von einigen Millimetern angestrebt. In diesem Fall ist es zweckmäßig, die Steuerung so auszulegen, daß die Auflagefläche des Hubtisches stets oberhalb der Bodenfläche des angesteuerten Regalfaches liegt.

Durch die weitere, im Anspruch 2 angegebene Maßnahme, den Elektromagnet an einer Parallelschwinge anzuordnen, deren Schwingen im wesentlichen horizontal verlaufen, kann der Elektromagnet, der beim Auslagern eines Behälters kraftschlüssig mit dessen magnetisierbarer Platte verbunden ist, der aufwärts gerichteten Bewegungskomponente des Behälters bei dessen Bewegung vom tiefer liegenden Boden des Regalfachs auf den höher liegenden Hubtisch folgen. Auf diese Weise werden Relativbewegungen zwischen dem Elektromagnet und der magnetisierbaren Platte vermieden, durch die sonst ein frühzeitiger Verschleiß des Elektromagneten und/oder der magnetisierbaren Platte eintreten könnte.

Durch die im Anspruch 3 angegebenen Maßnahmen nimmt der Elektromagnet während des Schubbetriebs beim Einlagern eines Behälters gegenüber den anderen Teilen der Greifvorrichtung eine Stellung ein, die gegenüber der Stellung während des Zugbetriebes beim Auslagern eines

0116126

Behälters zurückversetzt ist. Da der Elektromagnet stets nur an der Vorderseite der magnetisierbaren Platte eines Behälters angreift, wird er daher beim Heranfahren an einen Behälter über die Stellung hinaus weiterbewegt, in der er zuvor bei der Einlagerung dieses Behälters stillgesetzt worden war. Auf diese Weise kann die Greifvorrichtung bzw. deren Elektromagnet auch dann noch einen Behälter sicher erfassen, wenn dieser bei mit großer Geschwindigkeit erfolgtem Einlagern nach dem Stillsetzen des Elektromagneten auf dem Boden des Regalfaches noch weiterrutscht oder infolge von Vibrationen von der Stelle, an der er abgesetzt wurde, allmählich weggewandert ist.

Eine besonders vorteilhafte Ausgestaltung des Bediengerätes ergibt sich gemäß Anspruch 4 bei einer Zusammenfassung der vorstehend geschilderten Einzelmaßnahmen.

Die im Anspruch 5 angegebene Maßnahme ermöglicht bei ungleichmäßig beladenen Behältern sowie bei Behältern mit durchhängendem verwölbtem Boden ein verdrehsicheres Ein- und Auslagern. Die Drehbeweglichkeit der Greifköpfe ermöglicht wiederum eine planparallele Anlage der Elektromagnete beider Greifköpfe an der magnetisierbaren Platte bei schrägstehenden Behältern.

Im Anspruch 6 ist für solche Bediengeräte, bei denen die nach dem magnetischen Halteprinzip arbeitende Greifvorrichtung zwischen einer innerhalb der Bewegungsbahn gelegenen Mitnahmestellung und einer außerhalb dessen Bewegungsbahn gelegenen Ausweichstellung bewegbar ist, - eine vorteilhafte getriebemäßige Anordnung angegeben.

Durch die im Anspruch 7 vorgeschlagenen Maßnahmen wird erreicht, daß die an einem der Winkelhebel angreifenden Antriebskräfte direkt auf den zweiten Winkelhebel übertragen werden. Auf diese Weise wird vermieden, daß sich die verhältnismäßig lange Schiene verwinden oder verbiegen kann.

Bei zwei nebeneinander auf je einem Träger angeordneten Greifköpfen wird durch die im Anspruch 8 angegebenen Maßnahmen eine gegenseitige Ausrichtung der Greifköpfe bei jedem Absenken erzielt, so daß sie nach dem Anheben in einer stets gleichen winkelmäßigen Ausgangsstellung stehen.

Die Erfindung ist anhand eines in der Zeichnung dargestellten Ausführungsbeispieles erläutert. Es zeigen:

Fig. 1 eine Ansicht eines zwischen zwei Regalzeilen angeordneten Bediengerätes;

Fig. 2 eine Draufsicht auf den Hubtsich;

Fig. 3 eine Schnittdarstellung des Hubtisches nach Linie III-III der Fig. 2;

Fig. 4 eine Schnittdarstellung des Hubtisches nach Linie IV-IV der Fig. 3 mit einem vollständig aufgenommenen Behälter

Fig. 5 eine Schnittdarstellung des Hubtisches ähnlich der Fig. 4 jedoch mit einem Behälter bei der Einlagerung in ein Regalfach;

Fig. 6 eine Draufsicht auf einen Teil der Greifvorrichtung;

Fig. 7 eine Schnittdarstellung eines Greifkopfes nach Linie VII-VII der Fig. 6;

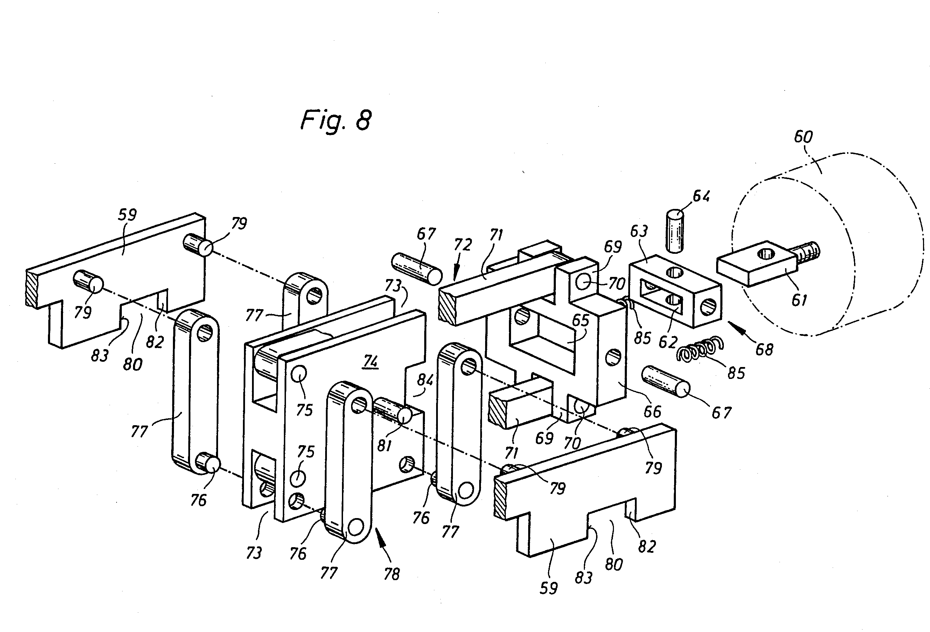

Fig. 8 eine zur besseren Übersichtlichkeit auseinandergezogene schaubildliche Darstellung eines Greifkopfes;

Fig. 9 eine Ansicht eines Greifkopfes kurz vor Auftreffen des Elektromagneten auf den Behälter;

Fig. 10 eine Ansicht eines Greifkopfes nach Erfassen eines Behälters aber vor Beginn der Auslagerung;

Fig. 11 eine Ansicht eines Greifkopfes während der Auslagerung eines Behälters.

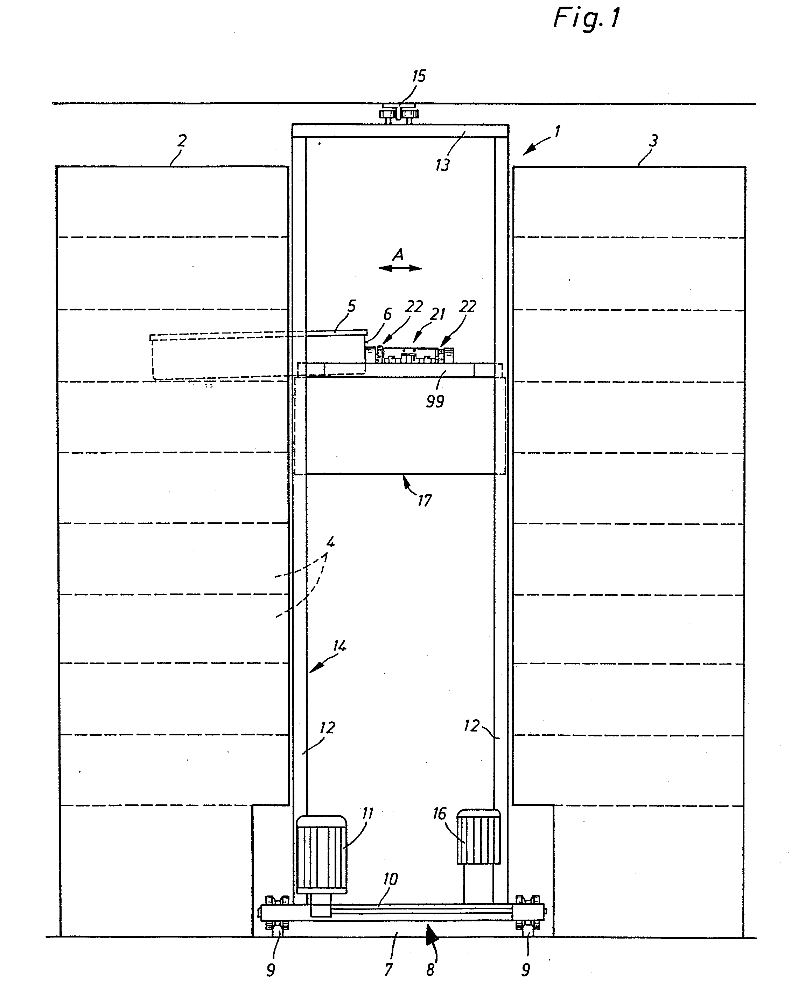

Das in Fig. 1 dargestellte Regal 1 weist zwei Regalzeilen 2, 3 mit einer Vielzahl von nebeneinander und übereinander angeordneten Regalfächern 4 für aus Stahlblech gefertigte Behälter 5 auf. Die beiden Stirnplatten der Behälter 5 sind mit 6 bezeichnet. In der Regalgasse 7 zwischen den Regalzeilen 2, 3 ist ein Bediengerät 8 angeordnet. Das Bediengerät 8 weist ein auf Schienen 9 angeordnetes Fahrgestell 10 und einen Getriebemotor 11 auf, durch den es längs der Regalzeilen 2, 3 verfahren werden kann. Das Bediengerät 8 enthält ferner einen von vier senkrechten Holmen 12 und vier waagrechten Stangen 13 gebildeten Rahmen 14, dessen oberes Ende mittels einer an der Decke des Lagerraumes befestigten Schiene 15 geführt ist. Zwischen den Holmen 12 ist in bekannter Weise ein mittels eines Getriebemotors 16 auf- und abbewegbarer Hubtisch 17 angeordnet.

Der Hubtisch 17 besteht aus einem von zwei vertikalen Seitenplatten 18 und einer horizontalen Zwischenplatte 19 gebildeten Rahmen 20, einer Greifvorrichtung 21 mit vier Greifköpfen 22 für die Behälter 5 und einer Querfördereinrichtung 23.

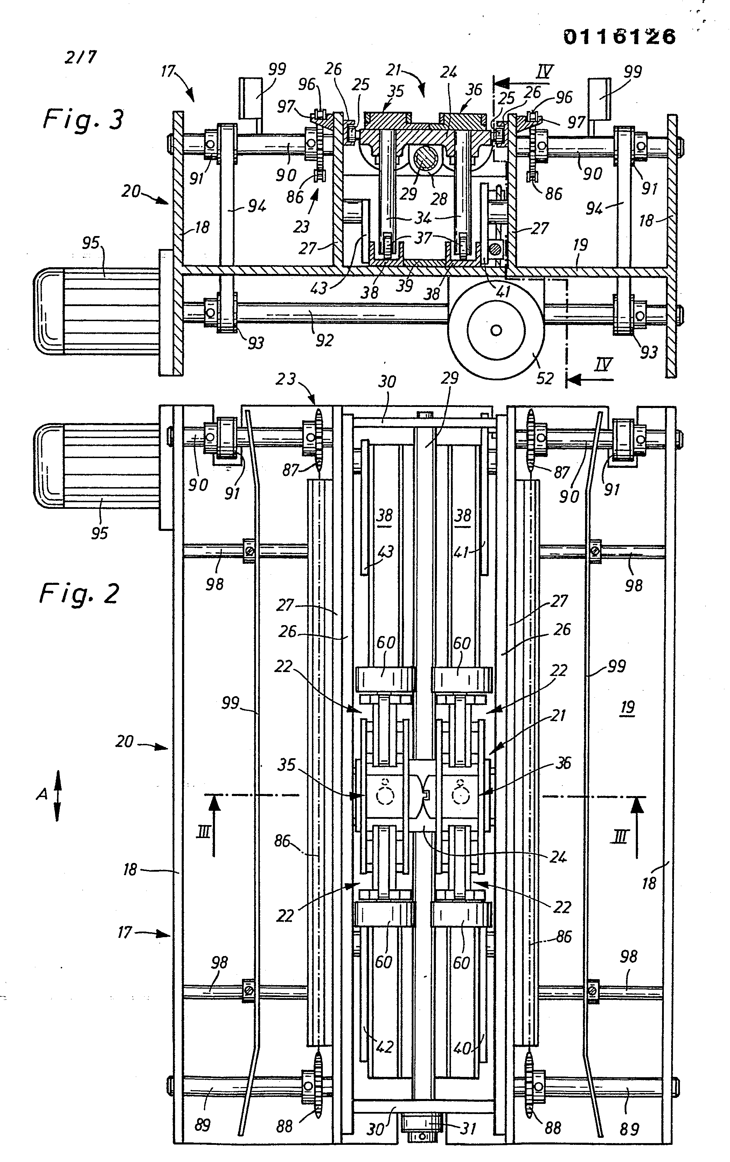

Die Greifvorrichtung 21 weist einen sich horizontal erstreckenden Schlitten 24 auf. Vier an zwei einander gegenüberliegenden Seiten des Schlittens 24 angeordnete Rollen 25 (Fig. 3) laufen in zwei einen U-förmigen Querschnitt aufweisenden Schienen 26, die sich in Fachrichtung A erstrecken und an zwei Stegplatten 27 befestigt sind. An der unteren Seite des Schlittens 24 ist ein Ansatzstück 28 vorhanden, das mit einem nicht bezeichneten Innengewinde versehen ist. Der Schlitten 24 ist mit seinem Ansatzstück 28 auf einer sich gleichfalls in Fachrichtung A erstreckenden Gewindespindel 29 angeordnet, die in zwei Querplatten 30 gelagert ist, welche ihrerseits an den Stegplatten 27 befestigt sind. Die Gewindespindel 29 steht über einen Riemen 31 mit einem Getriebemotor 32 in Antriebsverbindung, der durch ein Winkelstück 33 an der Unterseite der Zwischenplatte 19 befestigt ist.

Im Schlitten 24 sind zwei unabhängig voneinander drehbare vertikale Führungsstangen 34 verschiebbar aufgenommen, die ein Bestandteil je eines Trägers 35, 36 sind. Die Träger 35, 36 stützen sich über am unteren Ende der Führungsstangen 34 angeordnete Rollen 37 auf zwei einen U-förmigen Querschnitt aufweisende Schienen 38 ab, die durch eine Platte 39 miteinander verbunden sind. Die Schienen 38 sind an den langen Armen von vier paarweise angeordneten L-förmigen Winkelhebeln 40, 41, 42, 43 angelenkt, die an den Stegplatten 27 schwenkbar angeordnet sind. Die Winkelhebel 40, 41 sind durch eine an deren kurzen Armen angelenkte Zugstange 44 miteinander verbunden. Die Winkelhebel 40, 41, 42, 43 sind parallel zueinander angeordnet, d. h., sie befinden sich in jeweils vertikalen und damit parallelen Ebenen und haben zugleich dieselbe winkelmäßige Ausrichtung, so daß sie zusammen mit den Schienen 38 ein Parallelkurbelgetriebe bilden.

Am Winkelhebel 41 ist ein weiterer Arm 45 ausgebildet, der einen Bolzen 46 trägt. Auf dem Bolzen 46 ist ein Ende eines Zugseiles 47 befestigt, das über eine Umlenkrolle 48 läuft und dessen anderes Ende an einem Mitnehmer 49 befestigt ist. Der Mitnehmer 49 ist auf der Zugstange 50 eines mittels eines Winkelstückes 51 an der Unterseite der Zwischenplatte 19 angeordneten Elektromagneten 52 befestigt.

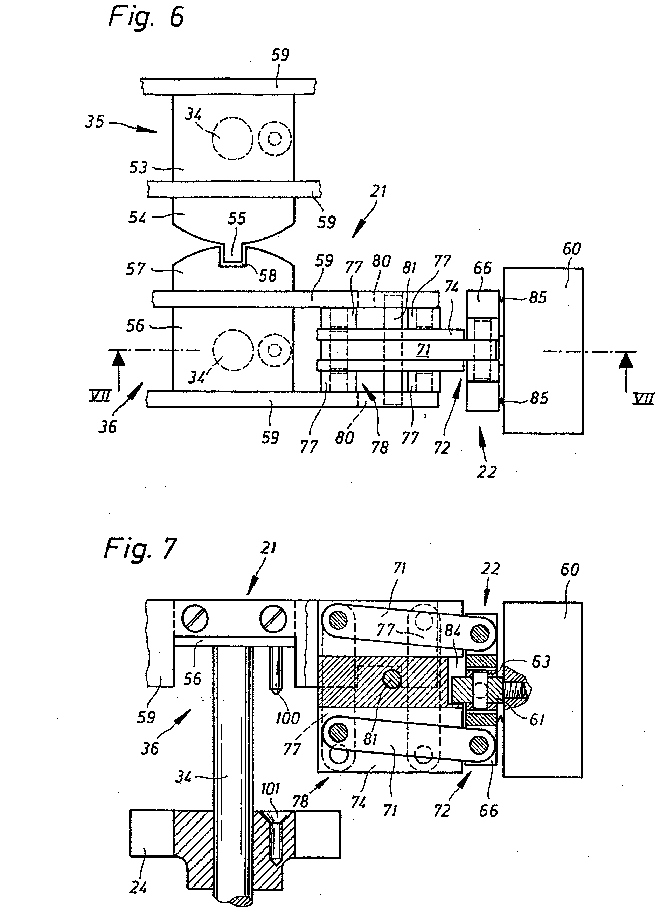

Der Träger 35 enthält eine auf der Führungsstange 34 befestigte Tragplatte 53 (Fig. 6), die in einen dünneren Ansatz 54 übergeht. Der Ansatz 54 ist bogenförmig ausgebildet und weist einen Zapfen 55 auf. Der Träger 36 enthält eine auf der anderen Führungsstange 34 befestigte Tragplatte 56, die in einen dünneren Ansatz 57 übergeht. Der Ansatz 57 ist ebenfalls bogenförmig ausgebildet und weist eine Aussparung 58 auf, in die der Zapfen 55 hineinragt. Zwischen dem Zapfen 55 und den Seitenflächen der Aussparung 58 besteht ein Spiel, wodurch sich die Tragplatten 53, 56 in begrenztem Maß unabhängig voneinander um die von den Führungsstangen 34 gebildeten vertikalen Achsen drehen können. An jeder der beiden Tragplatten 53, 56 sind je zwei Schenkelplatten 59 befestigt, welche die vier Greifköpfe 22 tragen.

Jeder Greifkopf 22 enthält einen Elektromagnet 60, der auf einem Tragstück 61 mit einem prismatischen Lagerteil befestigt ist. Das Tragstück 61 ist in einer Aussparung 62 eines Rahmens 63 aufgenommen und durch einen Bolzen 64 um eine vertikale Achse schwenkbar. Der Rahmen 63 ist in einer Aussparung 65 einer Rahmenplatte 66 aufgenommen und durch zwei Bolzen 67 um eine horizontale Achse schwenkbar. Die Teile 61 bis 67 bilden somit für den Elektromagnet 60 ein Kardangelenk 68. Die Rahmenplatte 66 ist über je zwei Ansätze 69 und je einen Bolzen 70 an den Enden zweier im wesentlichen horizontal verlaufender, zueinander paralleler Schwingen 71 angelenkt,

0116126

die als Sonderfall des Gelenkvierecks eine erste Parallel-schwinge 72 bilden. Die Schwingen 71 liegen zum Teil in Aussparungen 73 einer Trägerplatte 74 und sind durch Bolzen 75 gelenkig mit ihr verbunden. Die Trägerplatte 74 ist durch Bolzen 76 mit den unteren Enden von vier im wesentlichen vertikal verlaufenden, zueinander parallelen Schwingen 77 verbunden, die gemeinsam eine zweite Parallelschwinge 78 bilden. Die oberen Enden der Schwingen 77 sind durch Bolzen 79 an den Schenkelplatten 59 angelenkt.

In jeder Schenkelplatte 59 ist eine Aussparung 80 enthalten, in die ein in der Trägerplatte 74 befestigter, über deren Seitenflächen hinausragender Bolzen 81 eingreift, wobei die Begrenzungsfläche 82 der Aussparung 80 einen ersten Anschlag und die Begrenzungsfläche 83 einen zweiten Anschlag bildet. Die Trägerplatte 74 enthält eine Aussparung 84, in die das Ende des prismatischen Teils des Tragstückes 61 eingreift. An der Rahmenplatte 66 sind zwei einen gegenseitigen horizontalen Abstand aufweisende Druckfedern 85 befestigt, an denen sich der Elektromagnet 60 abstützt und auf diese Weise in einer vertikalen Ausrichtlage gehalten wird.

Die Querfördereinrichtung 23 besteht aus zwei in Fachrichtung A verlaufenden, als Laschenketten ausgebildeten Förderketten 86, die auf je einem Antriebsrad 87 und je einem Umlenkrad 88 angeordnet sind. Die Umlenkräder 88 sind auf je einer in den Seitenplatten 18 und den entsprechenden Stegplatten 27 gelagerten Achse 89 angeordnet. Die Antriebsräder 87 sind auf je einer in den Seitenplatten 18 und den entsprechenden Stegplatten 27 gelagerten Welle 90 befestigt. Auf jeder Welle 90 ist ein Riemenrad 91 befestigt. Auf einer in den Seitenplatten 18 gelagerten, durchgehenden Welle 92 sind zwei Riemenräder 93 befestigt, die über je einen Riemen 94 mit den Riemenrädern 91 verbunden sind. Die Welle 92 ist mit einem an der Außenseite des Rahmens 20 befestigten Getriebemotor 95 verbunden. Das obere Trum 96 jeder Förderkette 86 gleitet in einer an den entsprechenden Stegplatten 27 befestigten Führungsrinne 97. Die Oberkanten der beiden oberen Trume 96 überragen die Oberkanten der Seitenplatten 18, der Stegplatten 27 und der Tragplatten 53, 56 bei abgesenkten Trägern 35, 36, so daß die oberen Trume 96 der Förderketten 86 die Auflagefläche des Hubtisches 17 bilden. An den Seitenplatten 18 und den gegenüberliegenden Stegplatten 27 sind je zwei Stangen 98 befestigt, auf denen je eine an den Enden abgewinkelte Führungsplatte 99 verstellbar angeordnet ist.

An der Unterseite der Tragplatten 53, 56 ist je ein zugespitzter Zentrierstift 100 (Fig. 7) befestigt, der bei abgesenkten Trägern 35, 36 in je eine trichterförmig aufgeweitete Aufnahmebohrung 101 im Schlitten 24 eingreift.

Funktionsbeschreibung

Wenn ein bestimmter Behälter 5 aus einem der Regalfächer 4 der Regalzeile 3 entnommen werden soll, wird das Bediengerät 8 durch den Motor 11 in horizontaler Richtung und gleichzeitig der Hubtisch 17 durch den Motor 16 in vertikaler Richtung an das entsprechende Regalfach 4 herangefahren, bis die Greifköpfe 22 der Stirnplatte 6 des Behälters 5 gegenüberstehen. Die Steuerung des Motors 16 ist so ausgelegt, daß der Hubtisch 17 innerhalb eines Toleranzbereiches von einigen Millimetern stillgesetzt wird, die Oberkanten der oberen Trume 96 der beiden Förderketten 86 aber stets oberhalb der Bodenfläche 102 des Regalfaches 4 liegen.

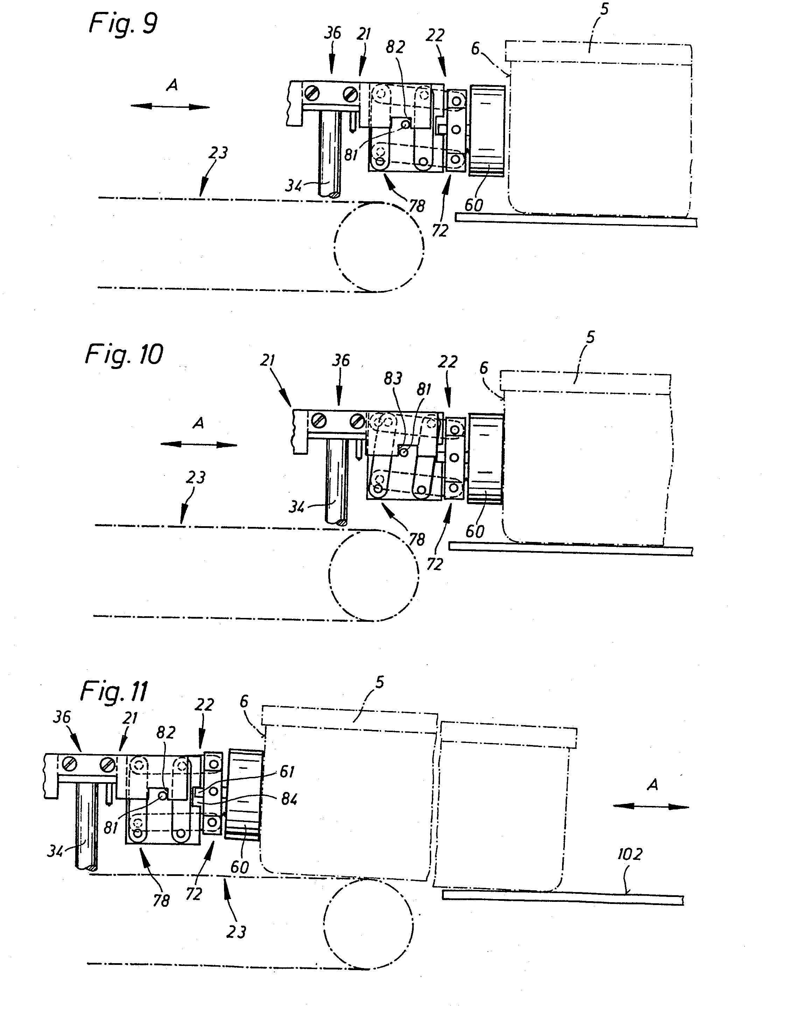

Danach wird der Getriebemotor 32 eingeschaltet, wobei die Schienen 38 durch den Elektromagnet 52, der über die Winkelhebel 40, 41 mit den Schienen 38 verbunden ist, so weit angehoben sind, daß die Greifköpfe 22 über den Förderketten 86 stehen. Der Getriebemotor 32 treibt über den Riemen 31 die Gewindespindel 29 in einem solchen Drehsinn an, daß der Schlitten 24 und damit die Greifvorrichtung 21 gemäß Figur 9 in Fachrichtung A nach rechts bewegt wird. Hierbei sind die Elektromagnete 60 und die Parallelschwingen 72 der vier Greifköpfe 22 über die Tragstücke 61 an den nicht näher bezeichneten unteren Begrenzungsflächen der Aussparungen 84 der Trägerplatten 74 abgestützt, wobei sich die Parallelschwingen 72 und die Elektromagnete 60 in einer unteren Schwenklage befinden (Fig.7). Gleichzeitig stehen die Schwingen 77 der Parallelschwingen 78 in vertikaler Lage, wobei sich die Bolzen 81 an den den ersten Anschlag bildenden Begrenzungsflächen 82 der Aussparungen 80 abstützen. Die Parallelschwingen 78 befinden sich somit gemeinsam mit den von ihnen getragenen Parallelschwingen 72 und den Elektromagneten 60 in einer durch die Bolzen 81 und die Begrenzungsflächen 82 bestimmten Ruhestellung in Bezug auf die Tragplatten 53, 56.

Der Getriebemotor 32 bewegt die Greifvorrichtung 21 bei der Auslagerung eines Behälters 5 genau so weit wie bei der Einlagerung. Bei der Einlagerung des jetzt auszulagernden Behälters 5 hatten sich die Elektromagnete 60, die Parallelschwingen 72 und die Trägerplatten 74 der beiden betroffenen Greifköpfe 22 über die Bolzen 81 an den Begrenzungsflächen 83 abgestützt, wobei sie unter Verschwenken der Schwingen 77 in bezug auf die Tragplatten 53, 56 um das Maß zurückversetzt waren, um das sich die Bolzen 81 zwischen den Begrenzungsflächen 82, 83 hin- und herbewegen können. Sofern der auszulagernde Behälter 5 unverändert an der Stelle stehengeblieben ist, an die er von den Elektromagneten 60 beim Einlagern geschoben wurde, legen sich die Elektromagnete 60 jetzt vor dem Stillsetzen des Schlittens 24 an die Stirnplatte 6 des Behälters 5 an. Im weiteren Verlauf der Verschiebebewegung des Schlittens 24 bewegen sich die Träger 35, 36 und damit die Schenkelplatten 59 relativ zu den jetzt festgehaltenen Elektromagneten 60, den Parallelschwingen 72 und den Trägerplatten 74, wobei die Schwingen 77 der Parallelschwingen 78 eine Schräglage einnehmen und die Greifköpfe 22 einen Leerhub ausführen. Der Getriebemotor 32 wird so abgeschaltet, daß der Schlitten 24 und die Greifvorrichtung 21 dann stillgesetzt werden, wenn die Bolzen 81 gemäß Fig. 10 an den Begrenzungsflächen 83 anliegen.

Noch vor dem Stillsetzen des Schlittens 24 werden die Elektromagnete 60 eingeschaltet, worauf sie nach dem Anstoßen an der Stirnplatte 6 kraftschlüssig mit dem Behälter 5 verbunden sind. Der vom gegenseitigen Abstand der Begrenzungsflächen 82, 83 abhängige Leerhub der Greifköpfe 22 ermöglicht es auch dann einen auszulagernden Behälter 5 zu erfassen, wenn dieser bei der früher erfolgten Einlagerung weitergerutscht oder anschließend infolge von Vibrationen vom ursprünglichen Platz weggewandert ist.

Unmittelbar nach dem Stillsetzen des Schlittens 24 wird der Getriebemotor 32 mit umgekehrter Laufrichtung erneut eingeschaltet, wodurch der Schlitten 24 und die Greifvorrichtung 21 gemäß Fig. 11 in Fachrichtung A nach links bewegt werden. Daraufhin führen die beiden Greifköpfe 22 zunächst wieder einen Leerhub aus, bis die Bolzen 81 an den Begrenzungsflächen 82 anstoßen. Erst danach ziehen die Elektromagnete 60 den Behälter 5 aus dem Regalfach 4 heraus auf die beiden Förderketten 86, die während dieser Zeit aufgrund der Selbsthemmung des ihnen zugeordneten Getriebemotors 95 noch stillstehen. Da die Oberkanten der oberen Trume 96 der beiden Förderketten 86 mit mehr oder weniger geringem Abstand oberhalb der Bodenfläche 102 des Regalfaches 4 liegen, wird das vordere Ende des Behälters 5 beim Ziehen auf die Förderketten 86 leicht angehoben und dadurch der Behälter 5 gegenüber der horizontalen Normallage geneigt. Die Elektromagnete 60 können dieser Aufwärts- und Kippbewegung folgen, indem sie sich einerseits entgegen der Kraftwirkung der Druckfedern 85 schrägstellen und indem andererseits die Schwingen 71 der Parallelschwingen 72 mit den Elektromagneten 60 gemäß Fig. 11 nach aufwärts verschwenken, wobei sich die Enden der Tragstücke 61 innerhalb der Aussparungen 84 nach aufwärts bewegen. Auf diese Weise finden zwischen den Elektromagneten 60 und der Stirnplatte 6 keine Relativbewegungen statt, die anderenfalls zu einem frühzeitigen Verschleiß der Elektromagnete 60 und/oder der Stirnplatten 6 führen würden.

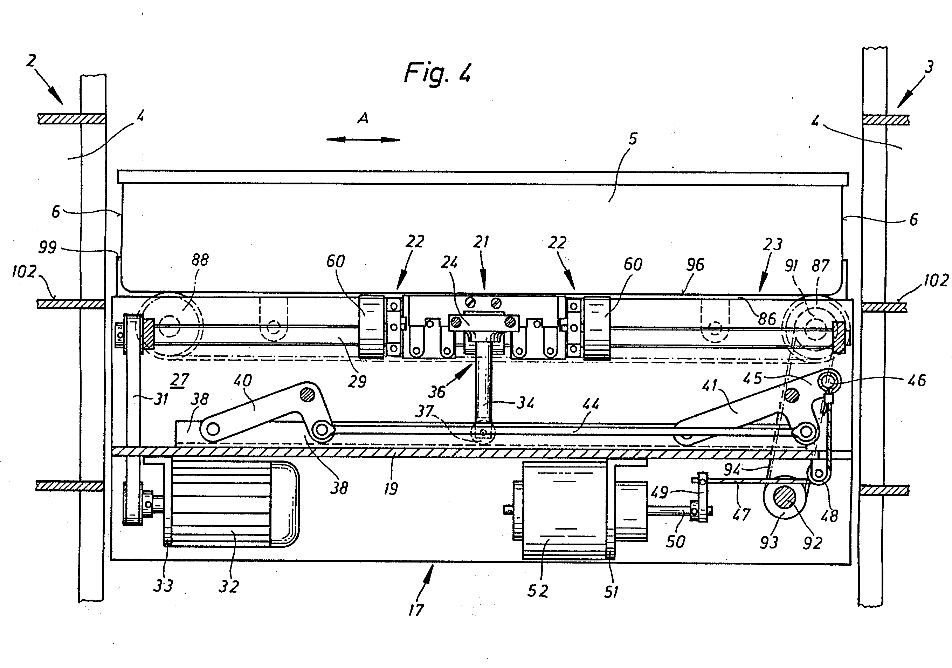

Sobald der Behälter 5 etwa zur Hälfte auf die Förderketten 86 gezogen worden ist, werden die Elektromagnete 60 abgeschaltet, worauf der Behälter 5 stehenbleibt und die Greifvorrichtung 21 allein weiterläuft. Nachdem sich die Greifköpfe 22 um ein geringes Maß von der Stirnplatte 6 des Behälters 5 entfernt haben, wird der Getriebemotor 32 abgeschaltet und damit die Horizontalbewegung der Greifvorrichtung 21 beendet. Daraufhin wird der Elektromagnet 52 abgeschaltet. Dies hat zur Folge, daß sich die Träger 35, 36 und die Schienen 38 aufgrund ihres Eigengewichtes unter Verschwenken der Winkelhebel 40, 41, 42, 43 so weit absenken, daß die Träger 35, 36 mit den Greifköpfen 22 unter die Oberkanten der oberen Trume 96 der beiden Förderketten 86 abtauchen. Sobald dies geschehen ist, wird der Getriebemotor 95 eingeschaltet, worauf die Förderketten 86 den Behälter 5 vollends aus dem Regalfach 4 über die Greifköpfe 22 hinweg auf den Hubtisch 17 ziehen (Fig. 4). Wenn sich der Behälter 5 vollständig auf dem Hubtisch 17 befindet, werden die Förderketten 86 durch Abschalten des Getriebemotors 95 stillgesetzt. Da sich die Förderketten 86 aufgrund der Selbsthemmung des Getriebemotors 95 nicht von allein bewegen können, ruht der Behälter 5 während einer anschließenden Hub- oder Senkbewegung des Hubtisches 17 und/oder einer Bewegung des Bediengerätes 8 verschiebungsfrei auf den Förderketten 86.

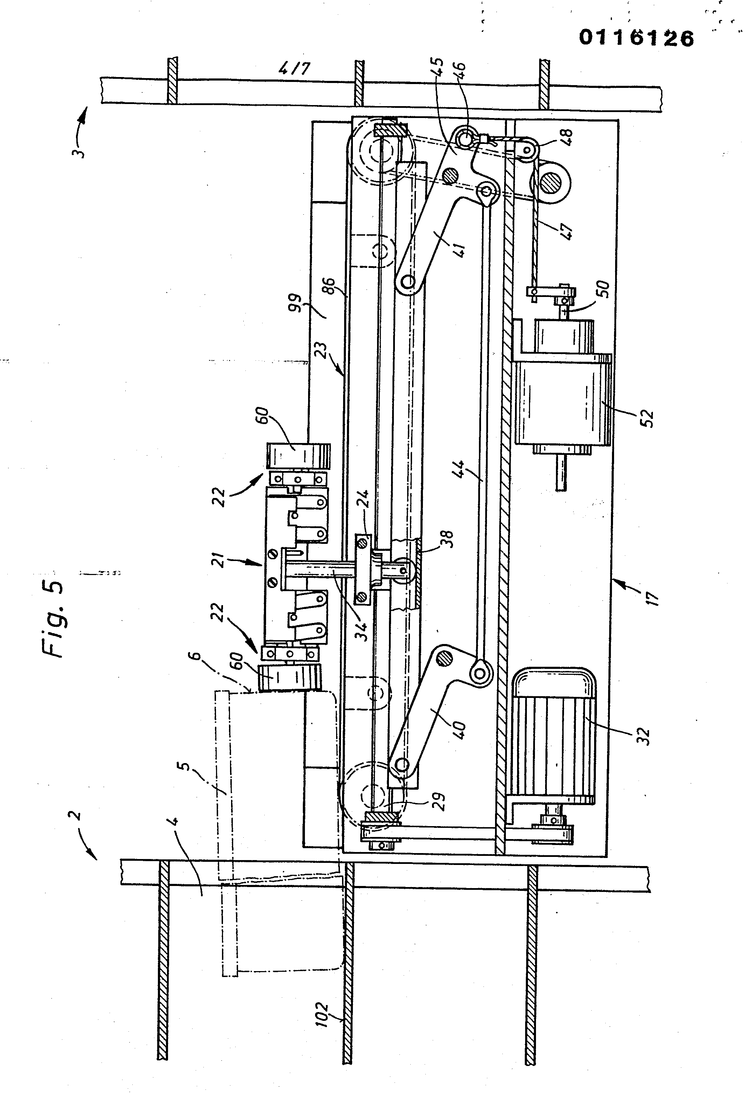

Zum Einlagern eines Behälters 5 in ein Regalfach 4 ist der Bewegungsablauf umgekehrt. Der Behälter 5 wird also zuerst durch die Förderketten 86 bewegt und dabei so weit vom Hubtisch 17 herunter in das Regalfach 4 eingeschoben, bis die Träger 35, 36 mit den vier Greifköpfen 22 freiliegen. Danach wird der Elektromagnet 52 eingeschaltet, der über das Zugseil 47, den Winkelhebel 41, die Zugstange 44 und den Winkelhebel 40 die Schienen 38 so weit anhebt, daß die Greifköpfe 22 über die oberen Trume 96 der beiden Förderketten 86 hinausragen. Danach wird der Getriebemotor 32 eingeschaltet, worauf sich die Elektromagnete 60 der betreffenden Greifköpfe 22 an die Stirnplatte 6 des Behälters 5 anlegen. Während nun die Horizontalbewegung der Elektromagnete 60 zunächst vom Behälter 5 unterbrochen wird, bewegen sich die Tragplatten 53, 56 weiter in Richtung auf den Behälter 5. Erst wenn die Begrenzungsflächen 83 an den Bolzen 81 anstoßen wird die Antriebsbewegung des Getriebemotors 32 auch wieder auf die Elektromagnete 60 übertragen, worauf sie den Behälter 5 vollends in das Regalfach 4 einschieben. Sobald der Behälter 5 während der Einlagerung mit seinem vorderen Ende auf die Bodenfläche 102 des Regalfaches 4 aufsetzt und der Behälter 5 sich infolgedessen aus der horizontalen Normallage neigt, folgen die Elektromagnete 60 der Aufwärts- und Kippbewegung der Stirnfläche 6 wie in Fig. 5 dargestellt. Vor dem endgültigen Einschieben des Behälters 5 in das Regalfach 4 werden die Elektromagnete 60 abgeschaltet, damit sich der Behälter 5 ungehindert auf der tieferliegenden Bodenfläche 102 absenken kann.

Um einem durch die Relativbewegung der Behälter 5 zu den stillstehenden Förderketten 86 bedingten, eventuell frühzeitig auftretenden Verschleiß der Förderketten 86 und/oder der Behälter 5 vorzubeugen, kann beispielsweise durch Anordnen einer schaltbaren Kupplung zwischen dem Getriebemotor 95 und der Welle 92 erreicht werden, daß sich die Förderketten 86 beim Herauf- und Herunterschieben eines Behälters 5 leer mitbewegen, so daß hierbei zwischen dem Behälter 5 und den oberen Trumen 96 keine Relativbewegung stattfindet.

Patentansprüche

1. Regal mit in Fächern verschiebbar angeordneten
Behältern und wenigstens einem längs des Regals
verfahrbaren Bediengerät, das einen Hubtisch und
eine auf diesem bewegbare Greifvorrichtung mit
wenigstens einem Greifkopf für das Erfassen eines
Behälters aufweist, dadurch gekennzeichnet, daß
der Greifkopf (22) wenigstens einen Elektromagnet
(60), und jeder Behälter (5) an der dem Greifkopf
(22) zugekehrten Seite eine magnetisierbare Platte
(6) enthält.

2. Regal nach Anspruch 1, dadurch gekennzeichnet, daß
der Elektromagnet (60) kardanisch gelagert und an
einer Parallelschwinge (72) angeordnet ist, deren
Schwingen (71) im wesentlichen horizontal gerichtet
sind.

3. Regal nach Anspruch 1 oder 2, dadurch gekennzeichnet,
daß der Elektromagnet (60) an einer Parallelschwinge
(78) angeordnet ist, deren Schwingen (77) zwischen
durch Anschläge (82, 83) bestimmten Endlagen schwenkbar sind.

4. Regal nach Anspruch 1 bis 3, dadurch gekennzeichnet,
daß die kardanische Lagerung des Elektromagneten (60)
eine von den horizontalen Schwingen (71) der ersten
Parallelschwinge (72) getragene vertikale Rahmenplatte (66) enthält und daß die horizontalen
Schwingen (71) von einer Trägerplatte (74) aufgenommen sind, die von den Schwingen (77) der zweiten
Parallelschwinge (78) getragen ist.

0116126

5. Regal nach einem oder mehreren der Ansprüche 1 bis
4, dadurch gekennzeichnet, daß die Greifvorrichtung
(21) wenigstens zwei nebeneinander angeordnete Greifköpfe (22) aufweist, die unabhängig voneinander
um eine vertikale Achse schwenkbar sind.

6. Regal nach einem oder mehreren der Ansprüche 1 bis
5, bei dem die Greifvorrichtung auf einem horizontal bewegbaren Schlitten angeordnet und zwischen
einer innerhalb der Bewegungsbahn des Behälters
gelegenen Mitnahmestellung und einer außerhalb
dessen Bewegungsbahn gelegenen Ausweichstellung
bewegbar ist, dadurch gekennzeichnet, daß die
Greifvorrichtung (21) wenigstens einen auf dem
Schlitten (24) in vertikaler Richtung verschiebbar
angeordneten Träger (35; 36) enthält, an dessen
oberem Ende die Greifköpfe (22) angeordnet sind
und dessen unteres Ende sich auf wenigstens einer
horizontal verlaufenden, höhenbewegbaren Schiene (38)
abstützt.

7. Regal nach Anspruch 6, dadurch gekennzeichnet, daß
die Schiene (38) an wenigstens zwei gleich großen
parallel zueinander angeordneten Winkelhebeln
(40, 41) angelenkt ist, die durch eine Zugstange
(44) miteinander gekoppelt sind, und daß einer
der Winkelhebel (41) mit einem Antriebsmittel (52)
verbunden ist.

0116126

8. Regal nach Anspruch 5 und 6 mit zwei nebeneinander auf je einem Träger angeordneten Greifköpfen, dadurch gekennzeichnet, daß die Träger (35, 36) unabhängig voneinander um eine vertikale Achse schwenkbar sind und je einen Zentrierstift (100) tragen und daß der Schlitten (24) entsprechende Aufnahmebohrungen (101) enthält, wobei die Zentrierstifte (100) nur bei abgesenkten Trägern (35, 36) in die Aufnahmebohrungen (101) eingreifen.

*Fig.1*

0116126

Fig. 3

Fig. 2

Fig. 4

Fig. 5

## Fig. 6

## Fig. 7

Fig. 8

0116126

Fig. 9

A

Fig. 10

A

Fig. 11

A

**0116126**
Nummer der Anmeldung

**EUROPÄISCHER RECHERCHENBERICHT**

Europäisches Patentamt

EP  83 11 1067

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 782 565  (DORAN et al.) <br> * Spalte 4, Zeilen 1-22; Figuren 1, 2 * | 1 | B 66 F    9/07 <br> B 66 F    9/14 <br> B 65 G    1/04 |
| X | US-A-3 526 326  (CASTALDI) <br> * Spalte 4, Zeilen 34-43; Figuren 1, 4, 5 * | 1 | |
| A | DE-B-2 241 213  (GRÖZINGER) | | |
| A | GB-A-1 476 085  (ISTITUTO GRAFICO BERTELLO S.p.A.) | | |
| A | US-A-4 007 846  (PIPES) | | |
| D,A | DE-A-2 357 857  (SUPREME EQUIPMENT & SYSTEMS CORP.) | | |
| P,X | DE-U-8 137 748  (J. SANDT AG) <br> * Anspruch 5 * | 1 | |

**RECHERCHIERTE SACHGEBIETE (Int. Cl. ³)**

B 65 G    1/00
B 65 G    47/00
B 66 F    9/00

Der vorliegende Recherchenbericht wurde für alle Patentansprüche erstellt.

| Recherchenort | Abschlußdatum der Recherche | Prüfer |
|---|---|---|
| BERLIN | 15-03-1984 | KANAL P K |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82